# EUROPÄISCHE PATENTSCHRIFT

(11) **EP 3 003 645 B1**
(45) Veröffentlichungstag und Bekanntmachung des Hinweises auf die Patenterteilung: **06.11.2019**
(21) Anmeldenummer: 14736302.2
(22) Anmeldetag: 05.06.2014
(51) Int. Cl.: B25B 15/00, F16B 23/00, B25B 23/10

(54) **SCHRAUBENANTRIEB**
SCREW DRIVE
DISPOSITIF D'ENTRAÎNEMENT DE VIS

(30) Priorität: 05.06.2013 DE 102013105812
(43) Veröffentlichungstag der Anmeldung: 13.04.2016
(73) Patentinhaber: EJOT GmbH & Co. KG, 57319 Bad Berleburg (DE)
(72) Erfinder: LANDSMANN, Nils, 59955 Winterberg - Langewiese (DE)
(74) Vertreter: Puschmann Borchert Bardehle Patentanwälte Partnerschaft mbB
(86) Internationale Anmeldenummer: PCT/EP2014/061713
(87) Internationale Veröffentlichungsnummer: WO 2014/195410

(56) Entgegenhaltungen:
- EP-A1- 1 693 577
- EP-A1- 2 447 550
- EP-B1- 0 524 617
- DE-A1- 3 501 414
- DE-A1- 10 107 751
- DE-C2- 19 923 855
- GB-A- 1 491 515
- US-A1- 2009 260 489
- US-A1- 2011 048 181

## Beschreibung

Die Erfindung betrifft eine Schraube mit einem einen Antrieb aufweisenden Schraubenkopf gemäß dem Oberbegriff des Anspruches 1, sowie ein korrespondierendes Drehwerkzeug gemäß Anspruch 9, sowie ein Antriebssystem umfassend eine Schraube und ein Drehwerkzeug gemäß Anspruch 18.

Schrauben wie sie beispielsweise in der DE 199 23 855 C2 offenbart sind, weisen einen Schraubenkopf mit einem Antrieb auf. Der Antrieb ist in der Regel derart gestaltet, dass in den Schraubenkopf Ausnehmungen eingebracht sind, die so geformt sind, dass im Randbereich Nocken entstehen, die Seitenflächen zur Übertragung einer Drehbewegung aufweisen. Die Ausnehmungen erstrecken sich derart zwischen den Nocken, dass ein Werkzeug angesetzt werden kann, um bei dessen Drehung die Schraube mitzunehmen. Eine solche gattungsgemäße Schraube, wie auch ein korrespondierendes Eindrehwerkzeug mit einer zylindrischen Grundgestaltung ist auch der US 5 279 190 zu entnehmen.

Ein Eindrehwerkzeug für Schrauben ist auch der DE 101 07 751 A1 zu entnehmen, wobei der Werkzeuggrund und das Außenmaß des Eindrehwerkzeug im Eingriffsbereich einen konischen Verlauf aufweisen.

Bisher bekannte Schraubantriebe haben den Nachteil, dass durch die Gestaltung der Nocken in der Regel eine gute Drehbewegungsübertragung und hohe Verschleißfestigkeit gewährleistet ist, jedoch die Schraube nicht an dem Mitnahmewerkzeug temporär haftet.

Dazu ist es bekannt, magnetisiertes Werkzeug zu verwenden, um eine gewisse Verlustsicherung während des Schraubvorgangs zu gewährleisten. Diese Art der Halterung funktioniert jedoch nicht bei nicht-ferromagnetischen Schrauben.

Die US 2009/0260489, die US 2011/0048181 A1, die GB 1 491 515 und die EP 1 693 577 A1 offenbaren einen Schraubenantrieb, der Nocken aufweist, welche sich in Richtung des Schraubenschafts annähern. Die Nocken sind als konvexe Formen ausgestaltet, welche mit einem korrespondierend gestalteten Werkzeug angetrieben werden.

Eine Klemmung der Schraube kann wie in der DE 10 2004 022 852 DE A1 offenbart nur durch die Verwendung eines speziellen Werkzeugs mit einem sich in Richtung der Spitze verjüngenden Kern, der an seiner Umfangsfläche ebene Bereiche aufweist, gewährleistet werden.

In der EP 0 524 617 B1 ist ein Antrieb offenbart, der Nocken zum Antrieb der Schraube aufweist, die durch Ausnehmungen im Schraubenkopf um die Nocken herum gebildet werden. Die Nocken weisen einen Seitenbereich zur Aufnahme des Drehmoments auf, die über eine Stirnfläche verbunden sind. Die Stirnfläche weist an ihrem dem Schraubenschaft abgewandten kopfseitigen Ende eine konkave Oberflächenkontur auf, um die Einführung eines Schraubwerkzeugs in dem Antrieb zu verbessern.

Um die Korrosionseigenschaften von Schrauben, besonders für den Einsatz an thermisch behandelten Elementen, zu verbessern, ist es üblich, diese durch Tauch-/ Schleuder-/ oder Spritztechnik zu beschichten. Beispiele hierfür sind Zinklamellensysteme, Versiegelungen, etc.. Durch ihre Viskosität und Adhäsionsneigung neigen diese Beschichtungsverfahren zu unterschiedlichen Schichtanhäufungen auf konkaven Formen, insbesondere konkaven Flächen oder Radien.

Die Antriebe und Gewinde setzen sich bei aktuellem Stand der Technik örtlich mit Schichtanhäufungen bis zu 200 µm zu und die Funktion / Spezifikation kann teilweise nicht mehr erfüllt werden. Damit durch diese Schichtanhäufungen keine Beeinträchtigung des Schraubvorgangs erfolgt, werden solche Oberflächen nach dem Stand der Technik nicht auf Klein oder Kleinstschrauben angewendet. Beispielsweise wird eine Zinklamellenbeschichtung, normalerweise erst ab 6 mm Nenndurchmesser in mehreren Schichten aufgebracht.

Es ist Aufgabe der Erfindung, eine Schraube, insbesondere Klein- oder Kleinstschraube anzugeben, deren Antrieb so ausgestaltet ist, dass seine Handhabung weiter verbessert wird, wobei die Schraube durch einen mechanischen Klemmeffekt an einem einfach gestalteten korrespondierenden Drehwerkzeug zumindest temporär festgelegt werden kann.

Die Aufgabe wird für die Schraube durch die kennzeichnenden Merkmale des Anspruches 1 in Verbindung mit seinen Oberbegriffsmerkmalen gelöst.

Die Unteransprüche bilden vorteilhafte Weiterentwicklungen der Erfindung.

In bekannter Art und Weise weist ein Schraubenkopf Nocken auf, die durch in den Schraubenkopf um die Nocken herum eingebrachte Ausnehmungen gebildet werden, wobei jede Nocke zwei Seitenflächen, die zur Drehmomentübertragung dienen, und eine die Seitenflächen verbindende Stirnfläche aufweist, wobei die Stirnfläche am vom Schraubenschaft abgewandten - Anlagebereich - im Wesentlichen eine konkave Oberflächenkontur aufweist.

Erfindungsgemäß ist vorgesehen, dass die Stirnfläche ferner derart gestaltet ist, dass ein um die Schraubenachse in einer Ebene orthogonal zur Schraubachse liegender virtueller Kreisumfang mit einem der Ebene zugeordneten Radius an jeder Nocke einen Berührpunkt mit der Stirnfläche hat, wobei über wenigstens einen Teilbereich der axialen Höhe - Anlagebereich - der Stirnfläche eine Vielzahl solcher Berührpunkte gebildet werden, wobei diese Berührpunkte eine Anlagelinie in der Mitte der Stirnfläche bilden.

Durch diese Gestaltung ergibt sich bei der Verwendung eines korrespondierenden Werkzeugs mit einem kreisförmigen Querschnitt des Grundkörpers, dass dieses bei Einführen an der Stirnfläche nur eine lineare Anlage erfährt. Der radiale Abstand der Stirnfläche der Nocken von der Schraubenachse bildet dabei das so genannte B-Maß, wobei der radial außen an Seitenflächen der Nocken angrenzende Umfang das A-Maß darstellt.

Wesentlich für die Erfindung ist, dass der Klemmeffekt durch die an der Nockenstirnfläche gebildete Anlagelinie im B-Maß vorgesehen ist. Dies hat den Vorteil, dass das A-Maß beliebig an die Bedürfnisse der Drehmomentübertragung oder andere Anforderungen angepasst werden kann, ohne dass der Klemmeffekt darunter leidet. Besonders vorteilhaft erweist sich der erfindungsgemäße Klemmeffekt bei sehr kleinen Schrauben, deren Handhabung durch das Klemmen der Schraube am Drehwerkzeug maßgeblich vereinfacht wird.

Die linienförmige Anlagefläche kann derart hergestellt sein, dass die konkave Oberflächengestaltung eine Krümmung aufweist, deren Radius in einer Ebene größer ist als der Radius des virtuellen Kreises dieser Ebene. Die konkave Kontur kann gemäß der Erfindung kreisförmig oder elliptisch sein, kann aber auch über Linienelemente einer solchen Form angenähert sein, wobei die Krümmung geringer ist als die des zugeordneten virtuellen Kreisumfangs.

Vorzugsweise ist die Stirnfläche derart gestaltet, dass der Radius des virtuellen Kreisumfangs in einem Teilbereich der axialen Höhenrichtung in Richtung des Schraubenschaftes kontinuierlich abnimmt. Dadurch verläuft die Anlagelinie geneigt gegenüber der Schraubenachse. Ein derart konischer Verlauf der Anlagelinie hat den Vorteil, dass unter Verwendung eines korrespondierenden Werkzeugs mit der gleichen Steigung der Hafteffekt erheblich vergrößert werden kann.

Dies ist insbesondere der Fall, wenn die Anlagelinie in einem Winkel von weniger als 10° gegenüber der Schraubenachse geneigt ist. Auf diese Weise entsteht bei Einbringen eines Drehwerkzeugs mit einem kegelstumpfförmigen Grundkörper eine verbesserte Presspassung.

Eine im Winkel gegenüber der Schraubenachse verlaufende Anlagelinie erhält man bevorzugt, indem das dem Schraubenschaft zugewandte Ende der Seitenfläche eine konvexe Kontur aufweist, wobei insbesondere die Verbindungslinie der Überlagerungspunkte der konvexen Kontur und der konkaven Kontur in ihrer senkrechten Projektion an den Enden der Seitenflächen parallel zur Schraubenachse liegt.

Auf diese Weise kann der Winkel der Anlagelinie über die Radien der konvexen und der konkaven Kontur eingestellt werden. Indem eine konvexe Kontur an dem dem Schraubenschaft zugewandten Ende des Antriebs ausgeführt ist, kann Beschichtungsmaterial, das bei einer Beschichtung auf die Schraube aufgebracht wird, besser aus den Kavitäten des Antriebs abgeführt werden. Dadurch können Schichtanhäufungen am B-Maß vermieden werden, die sich bei der Handhabung der Schraube störend auswirken. Dies trifft besonders bei Antrieben von Klein- und Kleinstschrauben zu.

Der Übergang von konkaver zu konvexer Struktur kann bevorzugt durch eine Freiformfläche gebildet sein. Dies stellt eine besonders robuste Art dar, eine lineare Anlage an der Seitenfläche zu ermöglichen, da dadurch eine weitgehend flächige Gestaltung erreicht ist, die dennoch eine lineare Anlage eines Drehwerkzeugs kreisförmigen Querschnitts im B-Maß zulässt. Da durch die flächige Ausbildung weitere Kavitäten vermieden werden, wirkt sich dies auch vorteilhaft auf die Abfuhr von überschüssigem Beschichtungsmaterial aus.

Vorzugsweise weist der Antrieb der Schraube genau drei Nocken auf, die in einer zugeordneten Ebene je einen Anlagepunkt an der Seitenfläche der Nocken aufweisen und über ihre Stirnflächen eine Anlagelinie bilden. Durch genau drei Nocken erfolgt eine ideale Zentrierung und damit ein optimierter Kraftschluss zwischen den Nocken und dem Grundkörper eines eingebrachten Eindrehwerkzeugs, um die Schraube an dem Drehwerkzeug zu halten.

Die Verwendung von genau drei Nocken dient zur Gewährleistung eines Stick-Fit-Effekts. Die Verwendung von genau drei solchen Nocken, die vorzugsweise ein innerstes B-Maß bilden, lässt auch grundsätzlich das Vorhandensein weiterer Nocken zur reinen Drehmomentübertragung zu. Die radial am weitesten innenliegenden Punkte der übrigen Nocken sind dabei weiter von der Schraubenachse beabstandet als der der Ebene zugeordnete Radius des virtuellen Kreises.

Dadurch kann ein verbessertes Handling der Schraube auch bei einer verbesserten Drehmomentübertragung gewährleistet werden. Ferner ergibt sich ein Gestaltungsspielraum der Mitnahmeelemente des Mitnahmewerkzeugs zur Übertragung des Drehmoments im A-Maß.

Im A-Maß des Schraubenantriebs weist der Antrieb insbesondere eine zylindrische Gestaltung auf.

Gemäß der Erfindung ist daher vorgesehen, dass die Nocken in ihrer radialen Erstreckung derart angeordnet und gestaltet sind, dass sie ein in den Schraubenantrieb eingeführtes Drehwerkzeug zentrieren, und ferner die Kopffläche in eine erste Fläche und eine zweite Fläche aufgeteilt ist, die je in einer Drehrichtung geneigt ist.

Indem die Kopffläche in zwei Flächen aufgeteilt ist, kann die Schraube in freier Drehrichtung schnell auf ein Drehwerkzeug aufgesetzt werden. Eine solche Gestaltung erweist sich besonders bei Klein- und Kleinstschrauben als vorteilhaft, da deren Handhabung, insbesondere das Aufsetzten auf ein Drehwerkzeug ohnehin schwierig ist.

Vorzugsweise sind die Flächen so angeordnet, dass sich die beiden Flächen in einer Schnittlinie schneiden, die sich in der Mitte der Nocke befindet.

Dadurch ist gewährleistet, dass sich durch eine minimale Drehbewegung der Schraube eine ideale Einführung des Drehwerkzeugs in die Schraube ergibt. Auch hat sich herausgestellt, dass die Fertigung einer solchen Schraube mit einer symmetrischen Gestaltung der Kopffläche erheblich vereinfacht ist.

In einer weiteren vorteilhaften Ausgestaltung ist die Schnittlinie gegenüber der orthogonal zur Schraubenachse liegenden Ebene in Richtung der Schraubenachse geneigt. Dies hat zur Folge, dass nicht nur die Mitnahmeelemente eines Drehwerkzeugs mit den Ausnehmungen der Nocken in Umfangsrichtung erleichtert eingeführt werden können, sondern auch eine Übereinstimmung in radialer Richtung erzwungen wird. Vorzugsweise kann eine Neigung von etwa 10° bis 30° gegenüber der orthogonal zur Schraubenachse liegenden Ebene gewählt werden.

Erfindungsgemäß schließen die beiden Flächen der Kopffläche an ihrer Schnittlinie einen stumpfen Winkel, insbesondere zwischen 120° und 160°, ein. Da ausgehend von dem Schraubenkopf zugewandten Ende die Neigung an der Kopffläche, die zur Drehmomentübertragung wirksamen Seitenflächen reduziert, ergibt sich für diese Neigungswinkel eine ideale Einstellung bezüglich der Wirksamkeit der Einführung und der Drehmomentübertragung.

Vorzugsweise ist die Schnittlinie der ersten Fläche mit der zweiten Fläche verrundet. Die Verrundung der Schnittlinie führt zur leichteren Zuführung des Werkzeugs, da ein verkanten von Drehwerkzeug und Schnittkante vermieden wird.

In einer weiteren vorteilhaften Ausgestaltung der Erfindung ist der Winkel, den die beiden Seitenflächen einer Nocke einschließen, geringer als der Winkel, den zwei Seitenflächen zweier benachbarter Nocken einschließen. Dadurch ergibt sich ein besonderer Vorteil bei der Herstellung von sehr kleinen Schrauben, da durch die im Vergleich zu den Nocken vergrößerten Ausnehmungen um die Nocken herum eine verbesserte Abfuhr eines Beschichtungsmaterials erfolgt.

In einem weiteren Aspekt der Erfindung betrifft diese ein Drehwerkzeug nach Anspruch 9.

Durch diese Grundgestaltung des Schafts ergibt sich eine einfach herzustellende Grundform, durch welche ein Klemmeffekt bei Verwendung einer Schraube mit einem zuvor beschriebenen Antrieb erzielt werden kann, wobei durch die zylindrische Gestaltung des Außenmaßes eine maximale Anlagefläche zur Übertragung des Drehmoments auf die Schraube gewährleistet wird.

Die Neigung der Mantelfläche des Konus liegt insbesondere in einem Winkel von mehr als 0° bis etwa 10°. Bei solch einer Gestaltung ergibt sich ein idealer Klemmeffekt mit dem Schraubenantrieb.

In einer weiteren Ausgestaltung sind die sich radial von dem Werkzeugschaft erstreckenden Mitnahmeelemente derart gestaltet, dass jedes Mitnahmeelement zwei Seitenflächen aufweist, wobei der Winkel zwischen den beiden Seitenflächen in Bezug auf die Schraubenachse größer ist als der Winkel zweier Seitenflächen benachbarter Mitnahmeelemente. Insbesondere beträgt das Verhältnis von Mitnahmeelementswinkel zu Abstandswinkel etwa drei zu vier. Ein solches Verhältnis ist auch für einen korrespondierenden Schraubenantrieb vorteilhaft.

Durch diese asymmetrische Aufteilung von Mitnahmeelementswinkel zu Abstandswinkel ergibt sich besonders bei der Herstellung von Werkzeugen für sehr kleine Schrauben der Vorteil, dass die Mitnahmeelemente trotz grundsätzlich geringer Dimensionierung ausreichend robust gestaltet werden können.

Das A-Maß des Drehwerkzeugs ist bei passendem B-Maß geringer als das A-Maß eines korrespondierenden Antriebs einer Schraube, wodurch Drehwerkzeug und Schraube spielbehaftet im A-Maß ineinander greifen.

In einer Weiterentwicklung der Erfindung sind bei einer zylindrischen Außenform der Mitnahmeelemente, welche in ihrem Querschnitt kreissegmentartig ausgestaltet sind, die im Übergang von Seitenfläche zu Außenfläche liegenden Ecken abgerundet gestaltet. Die Rundung der Kanten weist vorzugsweise einen Radius von weniger als der Hälfte der radialen Erstreckung der Seitenfläche auf. Die Seitenflächen sind derart gewählt, dass sich bei einer korrespondierend gestalteten Schraube eine Anlagefläche an der Seitenfläche einer Nocke ergibt. Die radiale Erstreckung der Seitenfläche ist dabei so gewählt, dass eine flächige Krafteinleitung gegeben ist, und dass ein Überdrehen der Nocke bei Aufbringen des Mindestbruchmoments der Schraube verhindert wird. Eine solche Gestaltung verhindert insbesondere bei einer geringen Zahl von Mitnahmeelementen wirksam ein Überdrehen.

Vorzugsweise sind an dem Eindrehwerkzeug genau drei Mitnahmeelemente vorgesehen. Durch genau drei Mitnahmeelemente kann eine weitgehende Gleichverteilung des Drehmoments auf alle Nocken trotz vorliegender Toleranzen gewährleistet werden.

Vorzugsweise ist die Rundung des Drehwerkzeugs elliptisch ausgeführt ist. Hierbei ist die Krümmung der Rundung am Mitnahmeelement kleiner als die Krümmung des korrespondierenden Übergangsbereichs am Antrieb einer Schraube mit passendem B-Maß. Ein passendes B-Maß liegt vor, wenn in einer Ebene das B-Maß der Schraube in etwa dem B-Maß des Drehwerkzeugs entspricht, wenn das Drehwerkzeug vollständig eingesetzt ist.

Gemäß der Erfindung können zwar nicht die physikalischen Eigenschaften des Beschichtungsmediums außer Kraft gesetzt werden, jedoch werden die bei der Applikation störenden Effekte bei der konstruktiven Auslegung soweit möglich mit berücksichtigt. Bei dem erfindungsgemäßen Antriebswerkzeug werden in den entsprechenden Radien die Freiräume für die durch oberflächenspannungsverursachte Schichtanhäufungen, sofern konstruktiv realisierbar berücksichtigt, so dass das Antriebswerkzeug auch bei hohen Schichtdicken am Antriebsboden und in den Übergängen vom A-Maß zu den Seitenflächen der Nocke, dieses noch einführbar ist und auch die Funktion noch voll erfüllt wird.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die zugeordneten Bezugszeichen verwendet. In der Zeichnung bedeutet:
- Fig. 1: eine erfindungsgemäße Schraube mit einem einen Antrieb aufweisenden Schraubenkopf;
- Fig. 2: eine perspektivische Ansicht des erfindungsgemäßen Antriebs mit drei Nocken;
- Fig. 3a: einen Schnitt B-B;
- Fig. 3b: einen Schnitt C-C;
- Fig. 3c: einen Schnitt D-D;
- Fig. 4a: Schnitte der Schraube mit eingeführtem Drehwerkzeug;
- Fig. 4b: Schnitte der Schraube mit eingeführtem Drehwerkzeug;
- Fig. 4c: Schnitte der Schraube mit eingeführtem Drehwerkzeug;
- Fig. 5: eine perspektivische Ansicht eines Drehwerkzeugs;
- Fig. 6: eine Draufsicht eines Drehwerkzeugs, und
- Fig. 7: eine Schnittansicht A-A.

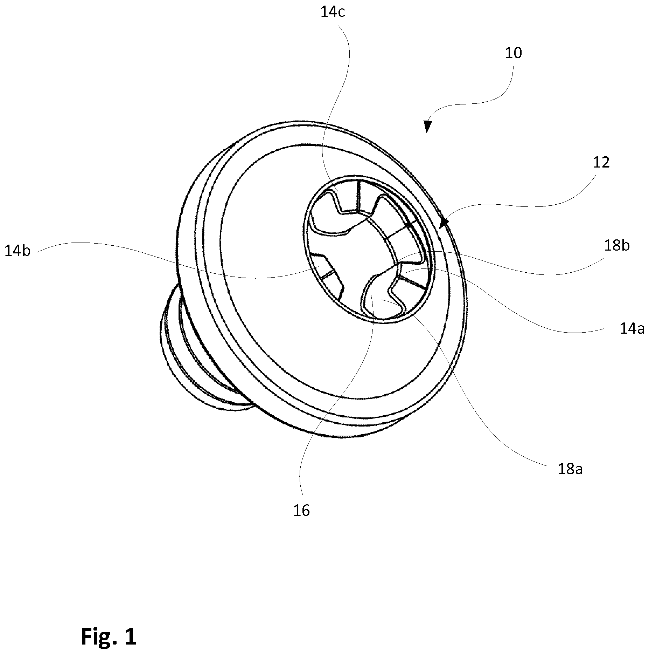

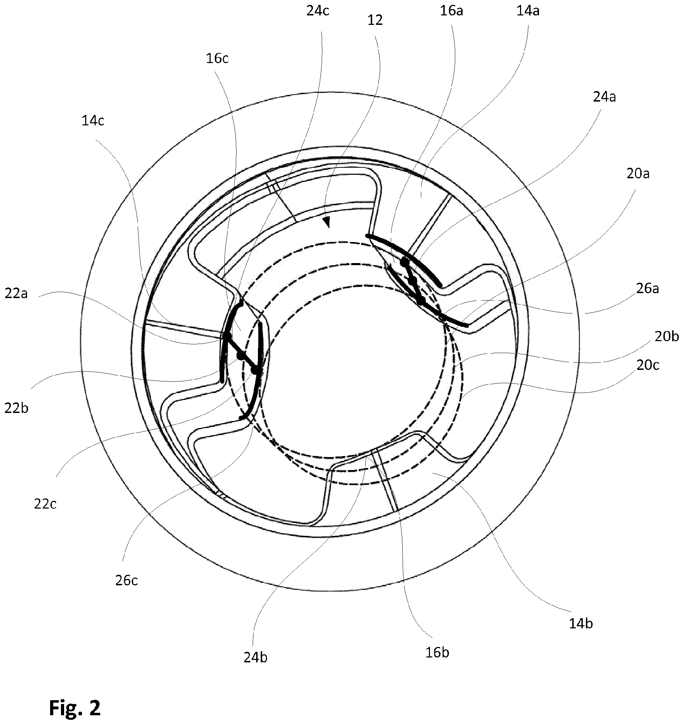

Fig. 1 zeigt eine erfindungsgemäße Schraube 10 mit einem einen Antrieb 12 aufweisenden Schraubenkopf. Der Antrieb 12 weist Nocken 14a, 14b, 14c auf, die zur Drehmomentübertragung dienen. Die Nocken 14a, 14b, 14c ergeben sich durch um die Nocken 14a, 14b, 14c herum eingebrachte Ausnehmungen im Schraubenkopf. Die Nocken 14a, 14b, 14c weisen dabei Seitenflächen 18a, 18b auf, sowie eine die beiden Seitenflächen 18a, 18b verbindende Stirnfläche 16. Die Drehmomentübertragung wird durch ein korrespondierendes Werkzeug in tangentialer Richtung auf die Seitenflächen 18a, 18b übertragen. Die wesentlichen Merkmale des Antriebs 12 werden in der Fig. 2 näher erläutert.

Fig. 2 zeigt die perspektivische Ansicht des erfindungsgemäßen Antriebs 12 mit drei Nocken 14a, 14b, 14c. Die Stirnflächen 16a, 16b, 16c sind erfindungsgemäß so gestaltet, dass diese an dem vom Schraubenkopf abgewandten Ende eine im Wesentlichen konkave Oberflächenkontur aufweisen. Die Stirnflächen 16a, 16b, 16c sind erfindungsgemäß so gestaltet, dass diese mit einem in einer Ebene orthogonal zur Schraubenachse liegenden virtuellen Kreisumfang 20a, 20b, 20c genau einen Berührpunkt haben.

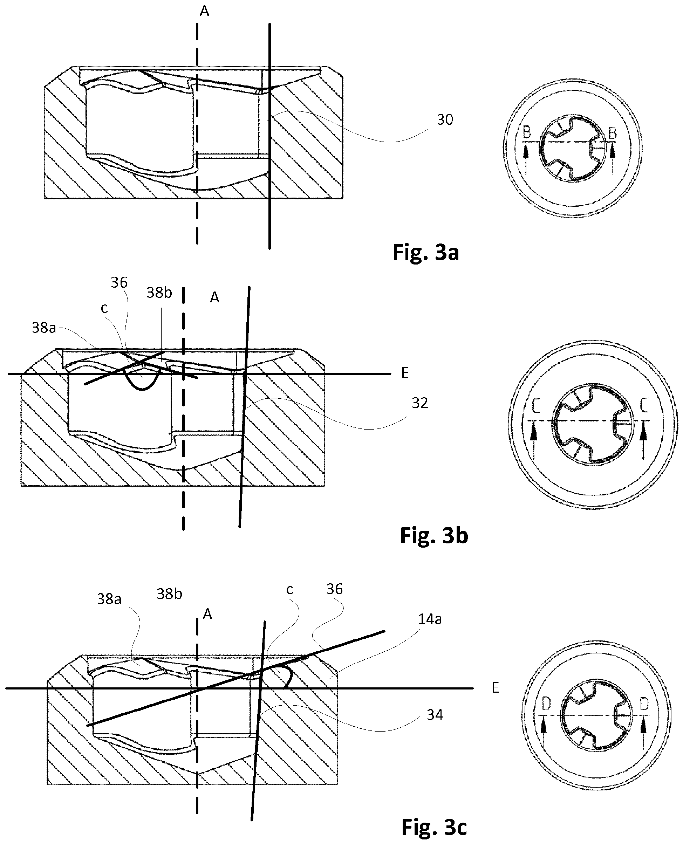

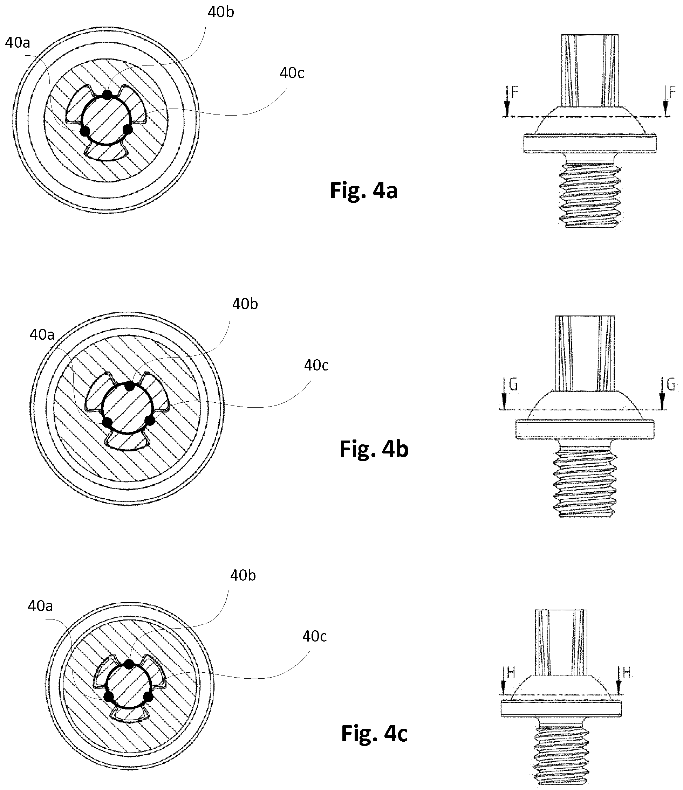

Die Stirnfläche 16 ist ferner derart ausgebildet, dass diese Berührpunkte 22a, 22b, 22c über wenigstens einen Teilbereich der axialen Höhe der Stirnfläche eine Vielzahl solcher Berührpunkte 22a, 22b, 22c aufweisen. Gemäß der erfindungsgemäßen Gestaltung der Stirnfläche 16 liegen diese Berührpunkte in einer Anlagelinie 24a, 24b, 24c in der Mitte der Stirnfläche 16 der Nocken 14a, 14b, 14c. Diese Gestaltung erlaubt bei Verwendung eines nicht dargestellten Drehwerkzeugs mit einem Grundköper mit einem kreisförmigen Querschnitt die Anlage des Drehwerkzeugs an den Anlagelinien 24a, 24b, 24c. Da der Grundkörper des Drehwerkzeugs nur an diesen drei Linien an der Schraube 10 anliegt, erlaubt dies eine so hohe radiale Anpresskraft, dass die Schraube 10 an diesen Anlagenlinien 24a, 24b, 24c an einem Drehwerkzeug festgehalten werden kann. Fig. 2 zeigt weiter, dass am Antriebsgrund die Nocken eine konvexe Kontur 26a, 26c aufweisen. Der Übergang von der konvexen zur konkaven Kontur ist über eine Freiformfläche gebildet. Diese ist zweckmäßig so gestaltet, dass sich die Anlagelinien 24a, 24b, 24c über den Anlagebereich ergeben. Die Gestaltung der Stirnfläche wird in den weiteren Fig. 3 und Fig. 4 näher beschrieben.

Fig. 3a zeigt einen Längsschnitt B-B durch den Schraubenkopf, der durch den Bereich verläuft, in dem sich die konvexe und konkave Oberflächenkontur in ihrer senkrechten Projektion überlagern. Wie Fig. 3a zu entnehmen ist, verläuft die Verbindungslinie 30 zwischen der konkaven und konvexen Kontur an dieser Stelle parallel zur Schraubenachse A.

Fig. 3b zeigt einen Längsschnitt C-C durch den Schraubenkopf zwischen dem Übergangsbereich von der Seitenfläche zur Stirnfläche 16 und der Mitte der Stirnfläche 16. In diesem Bereich ergibt sich bereits eine geringe Neigung der Verbindungslinie 32, welche die konkave Kontur im oberen Bereich der Anlagelinie und die konvexe Kontur am Antriebsgrund verbindet, zur Schraubenachse A.

Fig. 3b zeigt weiter, dass die beiden Flächen 38a, 38b, die sich in einer Schnittlinie 36 schneiden je in eine Drehrichtung gegenüber der orthogonal zur Schraubenachse liegenden Ebene E geneigt sind. Die Schnittlinie der beiden geneigten Flächen 38a, 38b liegt in der Mitte der Nocke 14b. Entsprechend ist gewährleistet, dass je nach Lage von Mitnahmeelementen eines einzusetzenden Drehwerkzeugs die Schraube 10 nur eine minimale Drehbewegung umsetzen muss, damit die Mitnahmeelemente in eine Lage korrespondierend zu den Ausnehmungen, um die Nocken 14b passend angestellt werden können. Die beiden Flächen 38a, 38b schließen dabei einen Winkel c von etwa 150° ein. Dieser Winkel c ist so gewählt, dass er die Einführhilfe und das notwendige Abgleiten der Mitnahmeelemente an der Nockenkopffläche 38 gewährleistet und dennoch eine maximale Nockenseitenfläche 18a, 18b realisiert, damit das notwendige Drehmoment problemlos übertragen werden kann. Durch diese Lösung ist es nun bei sehr kleinen Schrauben, deren Handhabung ohnehin schwierig ist, möglich, diese auf einfache Weise sicher auf ein Drehwerkzeug aufzusetzen.

Fig. 3c zeigt einen Längsschnitt D-D durch einen Schraubenkopf durch die Mitte der Nockenstirnfläche 16 und zeigt somit die Anlagelinie. Diese Anlagelinie ist der radial am weitest innenliegende Bereich der Nocke und weist die maximale Neigung der Stirnfläche gegenüber der Schraubenachse A auf. Diese Neigung liegt bei vorliegender Ausgestaltung insbesondere bei etwa 4°. Die Neigung ergibt sich aus dem horizontalen Versatz zwischen der konkaven und konvexen Kontur in der Mitte der Nockenstirnfläche und der Höhe der Eindringtiefe des Antriebs, bzw. der Höhe der Anlagelinie.

Wie in dieser Darstellung weiter zu erkennen ist, ist die Schnittlinie 36 der Flächen 38a und 38b gegenüber einer orthogonal zur Schraubenachse liegenden Ebene E in radialer Richtung um einen Winkel c geneigt. Durch diese Neigung c wird das Einführen eines Werkezeugs in radialer Richtung erleichtert, da ein Abgleiten in den zentralen Zentrierbereich zwischen den Nocken erzwungen wird. So wird bei Einführen eines nicht dargestellten Werkzeugs dieses automatisch in die Schraubenmitte geleitet.

Die Fig. 4a bis 4c zeigen Querschnitte der Schraube mit eingeführtem Drehwerkzeug, welches einen kreisförmigen Querschnitt aufweist. Wie den Darstellungen zu entnehmen ist, weisen die Nockenstirnflächen in den einzelnen Ebenen jeweils Berührpunkte 40a, 40b, 40c mit dem Drehwerkzeug mit kreisförmigem Querschnitt auf. Durch die erfindungsgemäße Gestaltung der Schraube kann so mit einem relativ einfach herzustellenden Drehwerkzeug mit vorzugsweise einem kegelstrumpfförmigen Grundkörper ein gewisser Presssitz an den Nocken erreicht werden.

Das Drehmoment wird über die Seitenflächen 18a, 18b der Nocken 14a, 14b, 14c übertragen. Durch die mechanische Klemmung des Werkzeugs mit der Schraube wird eine erheblich verbesserte Handhabung bei der Verarbeitung der Schrauben gewährleistet.

Entgegen magnetischen Maßnahmen ist eine solche Verlustsicherung auch bei Edelstahl oder nicht ferromagnetischen Materialien gegeben. Gut zu sehen an der schnittweisen Darstellung ist der Übergang der Stirnfläche von einer konkaven Gestaltung im oberen Bereich der Anlagelinie, wie in Fig. 4a dargestellt, zu einer konvexen Kontur am Antriebsgrund, wie in Fig. 4c zu erkennen.

In allen Ebenen der Anlagefläche ergibt sich, wie dargestellt, immer nur ein Berührpunkt des Grundkörpers des Drehwerkzeugs mit der Stirnfläche einer Nocke. Der dargestellte virtuelle Kreisumfang wird in seinem Radius von Fig. 4a zu Fig. 4c kontinuierlich geringer.

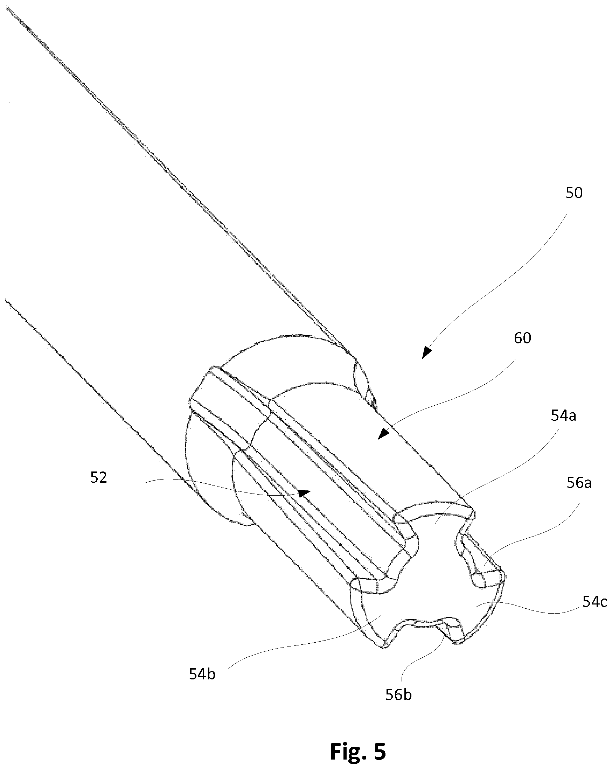

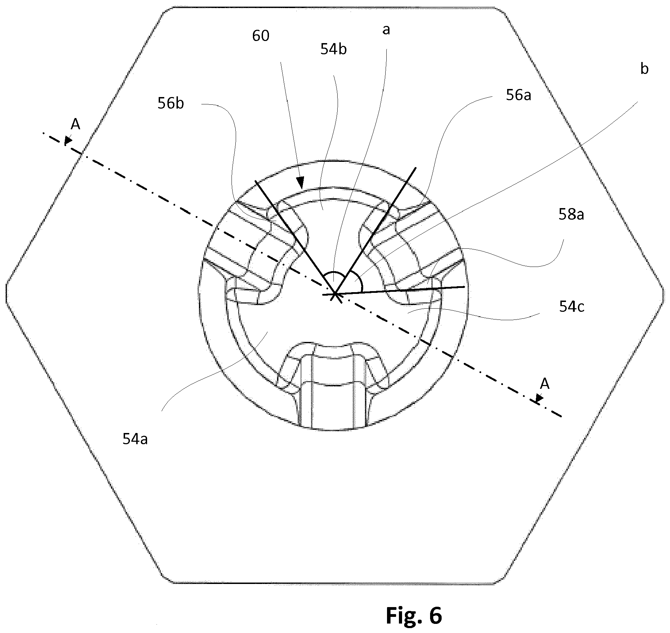

Fig. 5 zeigt ein Drehwerkzeug 50, welches einen Werkzeugschaft 52 sowie daran angeformte Mitnahmeelemente 54a, 54b, 54c aufweist. Die Mitnahmeelemente 54a, 54b, 54c sind, wie in Fig. 6 näher erläutert, kreissegmentartig gestaltet. Die Außenflächen 60 der Mitnahmeelemente 54a, 54b, 54c verlaufen im kreisförmigen Querschnitt über den gesamten Außenbereich zylindrisch. Demgegenüber weist der Werkzeugschaft eine Kegelstumpfform auf, die sich zur Spitze des Drehwerkzeugs 50 hin verjüngt. Die Mitnahmeelemente 54a, 54b, 54c weisen Seitenflächen 56a und 56b auf, welche eine flächige Krafteinleitung in eine korrespondierende Nockenseitenfläche gewährleisten. Durch diese einfache Gestaltung kann dennoch in Verwendung mit einer nach den Fig. 1 bis 4 beschriebenen Schraube eine Klemmung der Schraube, die sich aufgrund der Anpresskraft an eine lineare Anlagefläche an der Stirnfläche der Nocke ergibt, mit dem Werkzeugschaft gewährleistet werden.

Fig. 6 zeigt die Draufsicht auf ein erfindungsgemäßes Drehwerkzeug. In dieser Draufsicht ist die grundsätzlich zylinderförmige kreissegmentartige Anordnung der Mitnahmeelemente 54a, 54b, 54c dargestellt. Die Mitnahmeelemente 54a, 54b, 54c weisen zwischen den Seitenflächen 56a und 56b einen Mitnahmeelementswinkel a auf. Zu der Seitenfläche 58a eines benachbarten Mitnahmeelements 54c ergibt sich ein Abstandswinkel b. Erfindungsgemäß ist vorgesehen, dass der Mitnahmeelementswinkel a größer ist als der Abstandswinkel b. Dies hat zur Folge, dass bei einem Werkzeug, welches für sehr kleine Schrauben gefertigt ist beispielsweise eine ausreichende Robustheit der Mitnahmeelemente 54a, 54b, 54c gewährleistet werden kann. Zudem ist in Fig. 6 dargestellt, dass die Mitnahmeelemente 54a, 54b, 54c in ihrem Übergangsbereich von der Seitenfläche 56a zu ihrem Außenbereich 60 eine Krümmung aufweisen. Diese Krümmung ist derart gewählt, dass sie größer ist als die korrespondierende Krümmung des entsprechenden Schraubenantriebs. Dadurch kann Beschichtungsablagerungen im Schraubenantrieb Rechnung getragen werden.

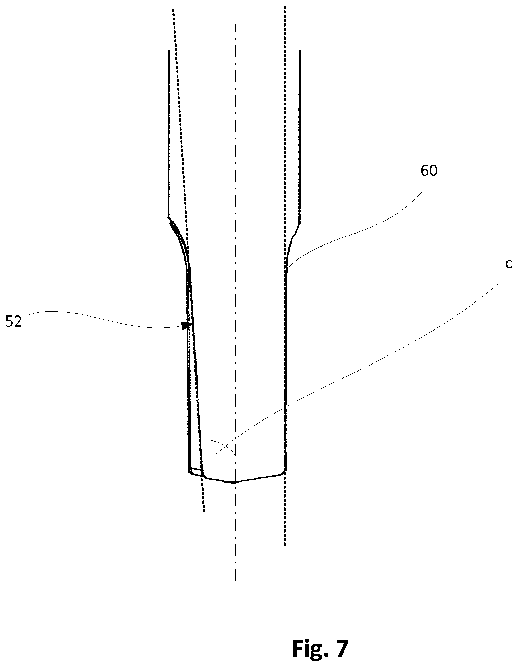

Fig. 7 zeigt eine Schnittansicht A-A, an welcher besonders gut zu erkennen ist, dass der kegelstumpfförmige Werkzeugschaft in einem Winkel von etwa 4° gegenüber der Werkzeugachse geneigt ist, wohingegen die Außenfläche parallel zur Schraubenachse verläuft.

## Patentansprüche

1. Schraube (10) mit einem einen Antrieb (12) aufweisenden Schraubenkopf, wobei der Antrieb (12) Nocken (14a, 14b, 14c) umfasst, die durch in den Schraubenkopf um die Nocken (14a, 14b, 14c) eingebrachte Ausnehmungen gebildet werden, wobei eine Nocke zwei Seitenflächen (18a, 18b) aufweist, die zur Drehbewegungsübertragung dienen, und eine die Seitenfläche (18a, 18b) verbindende Stirnfläche (16a, 16b, 16c) aufweist, wobei die Stirnfläche (16a, 16b, 16c) am vom Schraubenschaft abgewandten Ende des Anlagenbereichs eine konkave Oberflächenkontur aufweist, **dadurch gekennzeichnet, dass** die Stirnfläche (16a, 16b, 16c) derart gestaltet ist, dass ein um die Schraubenachse in einer Ebene orthogonal zur Schraubenachse liegender virtueller Kreisumfang (20a, 20b, 20c) mit einem der Ebene zugeordneten Radius an der Nocke einen Berührpunkt (22a, 22b, 22c) mit der Stirnfläche (16a, 16b, 16c) hat, wobei über wenigstens einen Teilbereich der axialen Höhe der Stirnfläche (16a, 16b, 16c) - Anlagebereich - eine Vielzahl solcher Berührpunkte (22a, 22b, 22c) gebildet werden, wobei diese Berührpunkte (22a, 22b, 22c) eine Anlagelinie (24a, 24b, 24c) in der Mitte der Stirnfläche (16a, 16b, 16c) bilden, so dass bei der Verwendung eines korrespondierenden Werkzeugs mit einem kreisförmigen Querschnitt des Grundkörpers, dieses, bei Einführen, an der Stirnfläche nur eine lineare Anlage erfährt.

2. Schraube (10) nach Anspruch 1, **dadurch gekennzeichnet, dass** wenigstens im Anlagebereich der Radius der Krümmung der konkaven Oberflächenkontur größer als der Radius des der Ebene zugeordneten virtuellen Kreisumfangs (20a, 20b, 20c) ist.

3. Schraube (10) nach Anspruch 1 oder 2, **dadurch gekennzeichnet, dass** die Stirnfläche (16a, 16b, 16c) derart gestaltet ist, dass der Radius des virtuellen Kreisumfangs (20a, 20b, 20c) in dem Teilbereich der axialen Höhe in Richtung des Schraubenschafts kontinuierlich abnimmt, wodurch die Anlagelinie (24a, 24b, 24c) in einem Winkel gegenüber der Schraubenachse verläuft.

4. Schraube (10) nach einem der vorangehenden Ansprüche, **dadurch gekennzeichnet, dass** die Anlagelinie (24a, 24b, 24c) in einem Winkel weniger als 10° gegenüber der Schraubenachse geneigt ist, so dass bei Einbringen eines kreissymmetrischen Werkzeugs eine Flächenpressung entsteht.

5. Schraube (10) nach einem der vorangehenden Ansprüche, **dadurch gekennzeichnet, dass** das dem Schraubenschaft zugewandte Schraubenkopfende eine konvexe Oberflächenkontur aufweist.

6. Schraube (10) nach Anspruch 5, **dadurch gekennzeichnet, dass** der Übergang von konkaver zu konvexer Kontur als Freiformfläche gebildet ist.

7. Schraube (10) nach einem der vorangehenden Ansprüche 5 oder 6, **dadurch gekennzeichnet, dass** der Übergang zwischen Stirn- und Seitenflächen (16a, 16b, 16c; 18a, 18b), an welchem sich die konkave und konvexe Kontur (26a, 26b) schneiden, parallel zur Schraubenachse verläuft.

8. Schraube (10) nach einem der vorangehenden Ansprüche, **dadurch gekennzeichnet, dass** drei Nocken (14a, 14b, 14c) vorgesehen sind, die in einer zugeordneten Ebene je einen Anlagepunkt an der Seitenfläche (18a, 18b) der Nocken (14a, 14b, 14c) aufweisen.

9. Drehwerkzeug (50) zum Eindrehen einer Schraube nach einem der vorangehenden Ansprüche, wobei das Drehwerkzeug einen Grundkörper umfasst, an welchem in radialer Erstreckung vom Grundkörper nach außen Mitnahmeelemente angeformt sind, **dadurch gekennzeichnet, dass** der Grundkörper wenigstens in einem Eingriffsbereich, in welchem die Spitze zum Antrieb einer Schraube in diese eingeführt wird, einen sich in Richtung der Spitze verjüngenden kegelförmigen Konus bildet, wobei das Außenmaß der Mitnahmeelemente in einer zylindrischen Grundform verläuft.

10. Drehwerkzeug (50) nach Anspruch 9, **dadurch gekennzeichnet, dass** die Mantelfläche des Konus gegenüber der Schraubenachse in einem Winkel von 0° bis etwa 10° geneigt ist.

11. Drehwerkzeug (50) nach einem der Ansprüche 9 und 10, **dadurch gekennzeichnet, dass** die Mitnahmeelemente kreissegmentartig gestaltet sind.

12. Drehwerkzeug (50) nach Anspruch 11, **dadurch gekennzeichnet, dass** die Mitnahmeelemente Seitenflächen aufweisen, die in Bezug auf die Schraubenachse einen Mitnahmeelementswinkel einschließen, der größer ist als der Winkel - Abstandswinkel - zwischen zwei benachbarten Seitenflächen.

13. Drehwerkzeug (50) nach einem der vorangehenden Ansprüche, **dadurch gekennzeichnet, dass** genau drei Mitnahmeelemente vorgesehen sind.

14. Drehwerkzeug (50)nach einem der Ansprüche 11 bis 13, **dadurch gekennzeichnet, dass** die Mitnahmeelemente im Übergangsbereich von der Seitenfläche zur Außenfläche gerundet ausgeführt sind.

15. Drehwerkzeug (50) nach einem der Ansprüche 11 bis 14, **dadurch gekennzeichnet, dass** die Rundung elliptisch ausgeführt ist.

16. Drehwerkzeug (50) nach einem der Ansprüche 11 bis 15, **dadurch gekennzeichnet, dass** die Krümmung der Rundung am Mitnahmeelement kleiner als die Krümmung des korrespondierenden Übergangsbereichs am Antrieb einer Schraube, ist die ein mit dem Werkzeug korrespondierendes B-Maß aufweist.

17. Antriebssystem umfassend eine Schraube nach einem der Ansprüche 1 bis 8 sowie ein Drehwerkzeug nach einem der Ansprüche 9 bis 16.

## Claims

1. Screw (10) with a screw head having a screw drive (12), said screw drive (12) comprising cams (14a, 14b, 14c) formed by making recesses in the screw head around the cams (14a, 14b, 14c), each cam having two side faces (18a, 18b) used for transmitting a rotary motion, and an end face (16a, 16b, 16c) connecting the side faces (18a, 18b), which end face (16a, 16b, 16c) has a concave surface contour at the end of the contact area facing away from the screw shank, **characterized in that** the end face (16a, 16b, 16c) is designed in such a way that a virtual circumference (20a, 20b, 20c), which extends around the screw axis in a plane orthogonal to the screw axis and has a radius assigned to the plane, has a contact point (22a, 22b, 22c) on the cam at the end face (16a, 16b, 16c) of the latter, with a multitude of such contact points (22a, 22b, 22c) being formed over at least part of the axial height of the end face (16a, 16b, 16c) - the contact area - which points of contact (22a, 22b, 22c) form a contact line (24a, 24b, 24c) at the centre of the end face (16a, 16b, 16c) so that when a matching tool having a base body of circular cross-section is used, said tool, when inserted, will only make linear contact with the end face.

2. Screw (10) according to claim 1, **characterized in that** at least in the contact region, the radius of the curvature of the concave surface contour is larger than the radius of the virtual circumference (20a, 20b, 20c) assigned to the plane.

3. Screw (10) according to claim 1 or 2, **characterized in that** the end face (16a, 16b, 16c) is designed such that the radius of the virtual circumference (20a, 20b, 20c) decreases continuously in the direction of the screw shank over said part of the axial height, resulting in the contact line (24a, 24b, 24c) extending at an angle relative to the screw axis.

4. Screw (10) according to any one of the preceding claims, **characterized in that** the contact line (24a, 24b, 24c) is inclined at an angle of less than 10° relative to the screw axis, with the result that a surface pressure will be produced when a circularly symmetrical tool is introduced.

5. Screw (10) according to any one of the preceding claims, **characterized in that** the screw head end that faces the screw shank has a convex surface contour.

6. Screw (10) according to claim 5, **characterized in that** the transition from a concave surface contour to convex surface contour is formed as a free-form surface.

7. Screw (10) according to any one of claims 5 or 6 above, **characterized in that** the transition between the end and side surfaces (16a, 16b, 16c; 18a, 18b) where the concave and convex contours (26a, 26b) intersect, extends parallel to the screw axis.

8. Screw (10) according to any one of the preceding claims, **characterized in that** three cams (14a, 14b, 14c) are provided which have a contact point each, in an associated plane, on the side surface (18a, 18b) of the cams (14a, 14b, 14c).

9. Driving tool (50) for screwing in a screw according to any one of the preceding claims, wherein the driving tool comprises a base body which has entraining elements formed thereon that extend radially outwards from the base body, **characterised in that** at least in an engaging portion of the tool by which the tip is inserted into a screw for driving the latter, the base body is in the form of a cone that tapers towards the tip, with the outer form of the entraining elements being of a cylindrical basic shape.

10. Driving tool (50) according to claim 9, **characterized in that** the lateral surface of the cone is inclined at an angle of between 0° and approx. 10° relative to the screw axis

11. Driving tool (50) according to any one of claims 9 and 10, **characterized in that** the entraining elements are designed in the form of circular segments.

12. Driving tool (50) according to claim 11, **characterized in that** the entraining elements have side surfaces which, with respect to the screw axis, define an entraining element angle between them which is wider than the angle - distance angle - between two adjacent side surfaces.

13. Driving tool (50) according to any one of the preceding claims, **characterized in that** precisely three entraining elements are provided.

14. Driving tool (50) according to any one of claims 11 to 13, **characterized in that** the entraining elements are of a rounded design in the transition area between the side surface and the outer surface.

15. Driving tool (50) according to any one of claims 11 to 14, **characterized in that** this rounded portion is elliptical.

16. Driving tool (50) according to any one of claims 11 to 15, **characterized in that** the curvature of the rounded portion of the entraining element is smaller than the curvature of the corresponding transition area on the drive of a screw which has a B-measure that matches the tool.

17. Drive system comprising a screw according to any one of claims 1 to 8 and a driving tool according to any one of claims 9 to 16.

## Revendications

1. Vis (10) avec une tête de vis présentant un entraînement (12), dans laquelle l'entraînement (12) comprend des cames (14a, 14b, 14c) qui sont formées par des évidements pratiqués dans la tête de vis autour des cames (14a, 14b, 14c), dans laquelle une came présente deux faces latérales (18a, 18b) qui servent à la transmission d'un mouvement de rotation et présente une face frontale (16a, 16b, 16c) raccordant les faces latérales (18a, 18b), dans laquelle la face frontale (16a, 16b, 16c) présente un contour de surface concave au niveau de l'extrémité, opposée à la tige de vis, de la région d'installation, **caractérisée en ce que** la face frontale (16a, 16b, 16c) est conçue de telle sorte qu'une circonférence virtuelle (20a, 20b, 20c) située autour de l'axe de vis dans un plan perpendiculaire à l'axe de vis dispose au niveau de la came, avec un rayon affecté au plan, d'un point de contact (22a, 22b, 22c) avec la face frontale (16a, 16b, 16c), dans laquelle une pluralité de tels points de contact (22a, 22b, 22c) sont formés par-dessus au moins une zone partielle de la hauteur axiale de la face frontale (16a, 16b, 16c) - zone d'installation -, dans laquelle ces points de contact (22a, 22b, 22c) forment une ligne d'installation (24a, 24b, 24c) au milieu de la face frontale (16a, 16b, 16c), de sorte que, lors de l'utilisation d'un outil correspondant avec une section transversale circulaire du corps de base, cet outil, lors de l'introduction, expérimente uniquement une installation linéaire au niveau de la face frontale.

2. Vis (10) selon la revendication 1, **caractérisée en ce qu'**au moins au niveau de la zone d'installation le rayon de la courbure du contour de surface concave est supérieur au rayon de la circonférence virtuelle (20a, 20b, 20c) affectée au plan.

3. Vis (10) selon la revendication 1 ou 2, **caractérisée en ce que** la face frontale (16a, 16b, 16c) est conçue de telle sorte que le rayon de la circonférence virtuelle (20a, 20b, 20c) dans la zone partielle de la hauteur axiale diminue en continu en direction de la tige de vis, moyennant quoi la ligne d'installation (24a, 24b, 24c) s'étend selon un angle par rapport à l'axe de vis.

4. Vis (10) selon l'une des revendications précédentes, **caractérisée en ce que** la ligne d'installation (24a, 24b, 24c) est inclinée selon un angle inférieur à 10° par rapport à l'axe de vis, de sorte que lors de l'introduction d'un outil circulairement symétrique se produise une pression superficielle.

5. Vis (10) selon l'une des revendications précédentes, **caractérisée en ce que** l'extrémité de tête de vis tournée vers la tige de vis présente un contour de surface convexe.

6. Vis (10) selon la revendication 5, **caractérisée en ce que** la transition d'un contour concave à convexe est formée en tant que surface de forme libre.

7. Vis (10) selon l'une des revendications précédentes 5 ou 6, **caractérisée en ce que** la transition entre faces frontales et latérales (16a, 16b, 16c ; 18a, 18b), au niveau desquelles le contour concave et convexe (26a, 26b) converge, s'étend parallèlement à l'axe de vis.

8. Vis (10) selon l'une des revendications précédentes, **caractérisée en ce que** sont prévues trois cames (14a, 14b, 14c) qui dans un plan affecté présentent chacune un point d'installation sur la face latérale (18a, 18b) des cames (14a, 14b, 14c).

9. Outil rotatif (50) pour engager une vis selon l'une des revendications précédentes, dans lequel l'outil rotatif comprend un corps de base contre lequel sont formés des éléments d'entraînement dans une extension radiale du corps de base vers l'extérieur, **caractérisé en ce que** le corps de base forme, au moins dans une zone de mise en prise dans laquelle la pointe est introduite dans une vis pour l'entraînement de celle-ci, un cône tronconique s'effilant en direction de la pointe, dans lequel la dimension extérieure des éléments d'entraînement s'étend dans une forme de base cylindrique.

10. Outil rotatif (50) selon la revendication 9, **caractérisé en ce que** la surface d'enveloppe du cône est inclinée selon un angle de 0° à environ 10° par rapport à l'axe de vis.

11. Outil rotatif (50) selon l'une des revendications 9 et 10, **caractérisé en ce que** les éléments d'entraînement sont conçus sous la forme de segments circulaires.

12. Outil rotatif (50) selon la revendication 11, **caractérisé en ce que** les éléments d'entraînement présentent des faces latérales qui enferment un angle d'éléments d'entraînement par rapport à l'axe de vis qui est supérieur à l'angle - angle d'écartement - entre deux faces latérales adjacentes.

13. Outil rotatif (50) selon l'une des revendications précédentes, **caractérisé en ce qu'**exactement trois éléments d'entraînement sont prévus.

14. Outil rotatif (50) selon l'une des revendications 11 à 13, **caractérisé en ce que** les éléments d'entraînement sont réalisés de manière arrondie dans la zone de transition de la face latérale à la face extérieure.

15. Outil rotatif (50) selon l'une des revendications 11 à 14, **caractérisé en ce** l'arrondi est réalisé de manière elliptique.

16. Outil rotatif (50) selon l'une des revendications 11 à 15, **caractérisé en ce que** la courbure de l'arrondi au niveau de l'élément d'entraînement est inférieure à la courbure de la zone de transition correspondante au niveau de l'entraînement d'une vis qui présente la dimension B correspondant à l'outil.

17. Système d'entraînement comprenant une vis selon l'une des revendications 1 à 8 ainsi qu'un outil rotatif selon l'une des revendications 9 à 16.
